# EUROPEAN PATENT SPECIFICATION

(11) **EP 1 317 050 B1**
(45) Date of publication and mention of the grant of the patent: **05.06.2013**
(21) Application number: 02079634.8
(22) Date of filing: 07.11.2002
(51) Int. Cl.: H02K 7/00, H02K 1/18, H02K 7/18, B60K 6/365, B60K 6/405, B60K 6/445, B60K 6/387, F16H 3/72

(54) **Hybrid farm tractor power train**
Antriebsstrang eines hybridlandwirtschaftlichen Schleppers
Train d'entraînement pour tracteur agricole hybride

(30) Priority: 30.11.2001 IT BO20010734
(43) Date of publication of application: 04.06.2003
(73) Proprietor: CNH Italia S.p.A., 10135 Torino (IT)
(72) Inventor: Bordini, Giorgio, 38003 Santa Cruz de Tenerife (ES)
(74) Representative: CNH IP Department

(56) References cited:
- EP-A- 0 298 541
- EP-A- 1 092 581
- EP-A- 1 143 599
- DE-A1- 10 025 089
- GB-A- 1 255 036
- US-A- 3 693 035

## Description

The present invention relates to a hybrid power train for farm tractors.

In the state of the art, hybrid power trains are known in which part of the energy produced by an internal combustion engine is converted into electric energy to improve control of the power train.

A hybrid power train of this type is described and claimed in EP-A-01203947.5 filed by the present Applicant, and to which the reader is referred for further details.

One of the problems posed by this type of power train is its overall volume, which makes it unsuitable for use on farm tractors, in which available space is limited. Moreover, known hybrid power trains are difficult to produce and involve a large number of component parts.

Known hybrid engines, in fact, comprise a housing containing the two electric motors/generators, each of which in turn comprises a respective casing.

EP 1 092 581 A2 discloses a hybrid vehicle comprising a clutch motor, an assist motor, and an engine connected via a dual clutch.

GB 1 255 036 A discloses a motor vehicle with hydrostatic power transmission. The vehicle has a chassis comprising a central tubular chassis member, containing a steam engine, hydraulic pumps and hydraulic accumulators.

DE 100 25 089 discloses an electric drive, comprising an electric motor and generator combined in a single housing for ease of assembly.

It is therefore an object of the present invention to provide a hybrid power train for a vehicle, which is more compact and easier to manufacture. This object is achieved in the present invention by replacing the electric motor casings with innovative structural casings. In a preferred embodiment, the casings advantageously are made of cast iron.

In so doing, the power of the electric motors can also be increased for a given size of the overall power train. Combining increased electric power and compactness, hybrid power trains can therefore also be used to advantage on farm tractors.

The present invention also provides a straightforward, effective solution to the problem of connecting the diesel engine mechanically to the power take-off (PTO) on the tractor, by routing the PTO shaft through a number of hollow shafts for transmitting power from the diesel engine, and to and from the two electric machines by means of a conventional epicyclic gear train.

According to the present invention, therefore, there is provided a hybrid power train for a vehicle, as claimed in Claim 1.

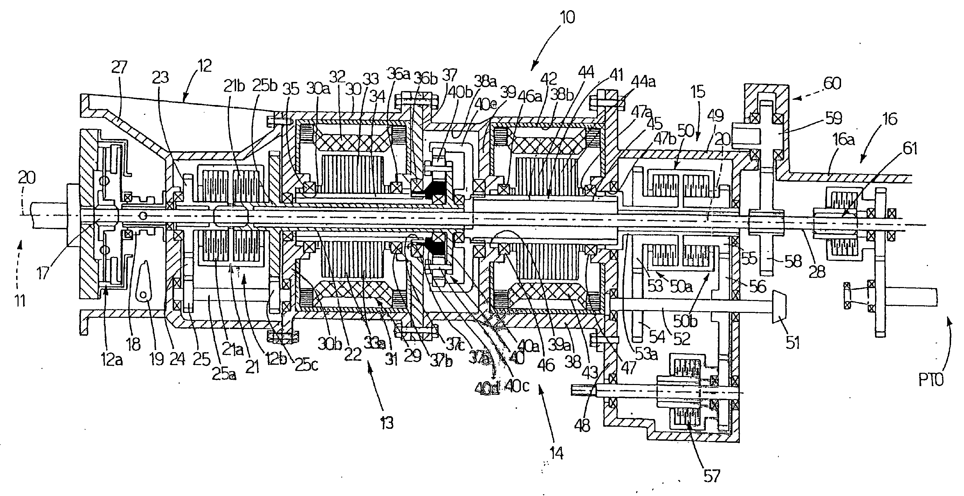

The present invention will now be described, by way of example, with reference to the accompanying drawing showing a non-limiting embodiment.

Number 10 in the accompanying drawing indicates the overall power train according to the present invention. Power train 10, which is of a hybrid type, comprises a diesel engine 11 (not shown) for rotating a shaft 17, and a number of units 12, 13, 14, 15, 16, the functions of which are explained in detail later on.

Going over the accompanying drawing from left to right, the first unit shown is a connecting/disconnecting unit 12. Unit 12 is commonly known in the art, and comprises a first stage 12a for connecting/disconnecting diesel engine 11 to/from shaft 17. Stage 12a is engaged or released by the operator by means of a sleeve 18 and a lever 19 operated by further actuating means not shown. To engage and release stage 12a, sleeve 18 moves in a direction defined by an axis 20, which is also the longitudinal axis of symmetry of shaft 17.

Downstream of first stage 12a, unit 12 comprises a known second stage 12b comprising a clutch device 21 for connecting/disconnecting shaft 17 to/from a hollow shaft 22. By activating a portion 21b of clutch device 21 (by known means not shown), shaft 22, becoming integral with shaft 17, is rotated in the same direction as diesel engine 11.

Conversely, by activating a portion 21a of clutch device 21, the power generated by diesel engine 11 is transmitted to shaft 22 in the opposite sense of rotation when compared to the former situation by a set of three intermeshing gears 23, 24, 25 (of which gear 24 is idle), a shaft 25a, and gears 25c and 25b.

Both stages 12a, 12b are supported in a known manner by a support 27 preferably, though not necessarily, made of cast iron.

Hollow shaft 22 houses, coaxially, a shaft 28 for powering a PTO. All shafts 17, 22, 28 have the same longitudinal axis of symmetry 20.

Unit 13 comprises a first electric machine 29 housed in a structural casing 30, the casing 30 also housing an electric insulating element 31 on which rests a conventional stator 32. A rotor 33 of conventional configuration completes electric machine 29, and is defined by a pack of laminations 33a fitted to a shaft 34 supported on two ball bearings 35, 36a. Bearing 35 is housed in a seat 30a formed in a wall 30b of the structural casing, and bearing 36a is housed in a seat 37a formed in a plate 37 at an opening 37c.

Structural casing 30, also advantageously, though not necessarily, made of cast iron, is bolted by known means on one side to support 27, and on the other to both plate 37 and a structural casing 38 forming part of the next unit 14. Being open on the side facing unit 14, structural casing 30 permits easy assembly of the component parts of electric machine 29.

Two chambers 38a, 38b are defined inside structural casing 38 of unit 14, and are separated by a wall 39 having an opening 39a.

The first chamber 38a houses an epicyclic gear train 40, the component parts of which and the way in which they are connected to the other parts of power train 10 are explained in detail later on.

Structural casing 38, and in particular the second chamber 38b, houses elements forming part of a second electric machine 41, which in principle comprises the same component parts as first electric machine 29. More particularly, second electric machine 41 comprises an electric insulating element 42, on which rests a conventional stator 43, and is completed by a rotor 44 fitted to a shaft 45 supported on two ball bearings 46, 47. Shaft 45 is also hollow and coaxial with axis 20, and rotor 44 comprises a pack of laminations 44a. As is conventional, the first and second electric machines 29, 41 are connected to a battery pack (not shown).

Since also second chamber 38b is open, at least on one side, namely outwards towards the next unit 15, the component parts of second electric machine 41 are assembled easily inside second chamber 38b.

As stated, actuating means (not shown) operate lever 19 to engage/release sleeve 18, which can be released automatically when power train 10 is running, or manually by the user operating a lever (not shown) or a pedal (not shown) to start directly in fully electric mode when power train 10 is off. When power train 10 is running, in fact, the tractor hydraulic circuit (not shown) is already pressurised so that enough hydraulic power is available to automatically release sleeve 18 to switch to fully electric mode. Conversely, when power train 10 is off, no hydraulic power is available to start directly in fully electric mode, so a manual control must be provided to release sleeve 18. Otherwise, operation of electric machines 29, 41 would rotate shaft 17, thus resulting in undesired start-up of diesel engine 11.

Epicyclic gear train 40 comprises a planet carrier 40a integral with hollow shaft 22; and a number of planet wheels 40b, each connected to planet carrier 40a by a respective spindle 40c. Epicyclic gear train 40 further comprises a sun gear 40d integral with hollow shaft 34 of electric machine 29; and a ring gear 40e integral with hollow shaft 45 of second electric machine 41.

By means of known mechanisms described in EP-A-01203947.5, epicyclic gear train 40 divides and recombines the mechanical power supplied by diesel engine 11, and the electric power produced by electric machines 29, 41.

Hollow shaft 45 of second electric machine 41 acts as a real energy summing shaft in that it provides for actually adding the mechanical energy transmitted to it by ring gear 40e of epicyclic gear train 40 to the rotational energy supplied by rotor 44.

As already mentioned, structural casing 30, plate 37, and structural casing 38 are preferably made of cast iron and connected to one another by known fastening means, such as a number of bolts and respective nuts, so that the structural unit housing the two electric machines 29, 41 is extremely compact and solid.

Bearing 46 is housed in a seat 46a formed in wall 39, close to opening 39a, whereas bearing 47 is housed in a seat 47a formed in a wall 48 of the next unit 15. The wall 48 has an opening 47b.

Unit 15 comprises a structural casing 49 to which wall 48 belongs and housing a conventional high/low (HI/LO) transmission 50. HI/LO transmission 50 rotates a pinion 51 of the rear wheel differential (not shown).

More specifically, HI/LO transmission 50 comprises two clutch devices 50a, 50b, both for rotating a shaft 52 to which pinion 51 is fitted. Clutch device 50a substantially comprises a clutch and two gears 53, 54; gear 54 being fitted to shaft 52. Similarly, device 50b comprises a clutch and two gears 55, 56. Gear 56 is also fitted to shaft 52, whereas gears 53 and 55 are fitted to a hollow shaft 53a. The angular speed of pinion 51 therefore depends on which of the two clutches is engaged, and therefore on which of the two pairs of gears 53, 54 or 55, 56 is rotating shaft 52.

In other words, when clutch device 50a is engaged, HI mode is selected and pinion 51 rotates at a high angular speed. In contrast, to rotate pinion 51 at low speed, clutch device 50a is simply released and device 50b engaged to select LO mode.

Gear 56 always transmits motion to a known device 57 for transmitting motion to the front wheels (not shown).

As shown in the accompanying drawing, PTO shaft 28 rotates a gear 58 meshing with a gear 59 for transmitting motion to a shaft controlling auxiliary facilities 60 (shown only partly).

At unit 16, shaft 28 is provided with a PTO clutch 61. Unit 16 is also housed in a structural casing 16a. Structural casings 49 and 16a are also advantageously made of cast iron.

Operation of the hybrid power train according to the present invention is described fully in EP-A-01203947.5 to which the reader is referred for further details.

The advantages of the hybrid power train according to the present invention are as follows:
- greater compactness for industrial use on farm tractors; according to the present invention, this is achieved by replacing the electric motor casings with innovative structural vehicle casings advantageously made of cast iron, so that, for a given size of the power train, the power of the electric motors can be increased, and the hybrid power train also can be used to advantage on farm machinery;
- small number of easy-to-assemble component parts; assembly of the component parts of the electric machines in particular is greatly simplified;
- improved disposal of heat generated by the electric machines, either directly to the outside or by means of coolant circulated in channels formed in the structural casings; and
- straightforward, effective solution to the problem of connecting the diesel engine mechanically to the PTO of the tractor, by routing the PTO shaft through a number of hollow shafts for transmitting power from the diesel engine, and to and from the two electric machines by means of a conventional epicyclic gear train.

## Claims

1. A hybrid power train (10) for a vehicle; the power train (10) comprising an internal combustion engine (11) and at least two electric machines (29, 41) which are connected mechanically via an epicyclic gear train (40) for dividing/recombining the power generated by said engine (11) and generated/drawn by said electric machines (29, 41), so that said electric machines (29, 41) function both as generators and as motors;
**characterized in that** the active elements defining at least one of said electric machines (29; 41) are housed in a structural casing (30; 38) forming part of -a unit (13,14) of the power train -(10) and defining -the structural body of the vehicle; said structural casing (30; 38) being formed in one piece and in the form of a half-shell open on one side, so as to permit assembly, from an axial direction of the power train (10), of an electrical insulating element (31; 42), a stator (32; 43), and a shaft (34; 45) provided with a rotor (33; 44) to form said at least one electric machine (29, 41).

2. A power train (10) according to claim 1, **characterized in that** said epicyclic gear train (40) for dividing/recombining the power generated by said engine (11) and generated/drawn by said electric machines (29, 41), is interposed between said electric machines (29, 41) .

3. A power train (10) according to claim 1 or 2, **characterized in that** said epicyclic gear train (40) for dividing/recombining the power is housed in the same structural casing (30; 38) as one of the two electric machines (29; 41).

4. A power train (10) according to any of the preceding claims, **characterized in that** said engine (11) is connected mechanically by a further shaft (22) to the planet carrier (40a) of said epicyclic gear train (40); wherein a first (34) of said shafts (34, 45) of a first (29) of said electric machines (29, 41) is connected mechanically to a sun gear (40d) of said epicyclic gear train (40); and wherein a second (45) of said shafts (34, 45) of a second (41) of said electric machines (29, 41) is connected mechanically to a ring gear (40e) of said epicyclic gear train (40).

5. A power train (10) according to claim 4, **characterized in that** said second shaft (45) of said second electric machine (41) adds up the energy transmitted mechanically to it by said ring gear (40e) to the rotational energy supplied by the rotor (44) of said second electric machine (41).

6. A power train (10) according to claim 4 or 5, **characterized in that** said shafts (34, 45) and said further shaft (22) are coaxial with an axis (20), are hollow, and house a shaft (28) for powering a PTO.

7. A power train (10) according to claims 4 to 6, **characterized in that** said further shaft (22) is housed in said shaft (34) provided with a rotor (33).

8. A power train (10) according to any of the preceding claims, **characterized in that** the power train comprises a support (27) and a number of structural casings (30, 38, 49, 16a) made of cast iron.

9. A power train (10) according to any of the preceding claims, **characterized in that** conduits for the cooling fluid of said electric machines (29; 41) are formed integrally in said structural casings (30; 38).

10. A power train (10) according to any of the preceding claims, **characterized in that** actuating means are provided to engage/release a sleeve (18) for connecting/disconnecting a first part (11) of the power train (10) generating purely mechanical power to/from a second part (13, 14) generating purely electric power; said sleeve (18) being engageable/releasable on the one hand automatically when the power train (10) is running, or on the other hand manually by an operator when the power train (10) is not running enabling to start directly in fully electric operating mode.

11. A power train according to any of the preceding claims, **characterized in that** the electrical insulating element (31, 42) is provided inbetween said structural casing (30, 38) and said stator (32, 43).

12. A power train according to any of the preceding claims, **characterized in that** the internal combustion engine (11) is a diesel engine.

13. A power train according to any of the preceding claims, **characterized in that** the vehicle is an agricultural tractor.

14. A power train according to any of the preceding claims, **characterized in that** an inverter (21) for changing the drive direction is provided inbetween said engine (11) and said at least two electric machines (29, 41) .

15. A power train according to claim 3 and any claim dependent therefrom, **characterized in that** a closure plate (37) is operable to close both said structural casing (30) housing said at least one of said electric machines (29) and said structural casing (38) housing said epicyclic gear train (40) for dividing/recombining the power.

16. A power train according to claim 3 and any claim dependent therefrom, **characterized in that** a separation wall (39), integral with said structural casing (38) containing said epicyclic gear train (40) for dividing/recombining the power, is provided inbetween said epicyclic gear train (40) and the electric machine (41) contained in said casing (38).

17. A farm tractor comprising a hybrid power train (10) according to any of the preceding claims.

## Patentansprüche

1. Hybrid-Antriebsstrang (10) für ein Fahrzeug, wobei der Antriebsstrang (10) einen Verbrennungsmotor (11) und zumindest zwei elektrische Maschinen (29, 41) umfasst, die mechanisch über einen Planetengetriebe-Strang (40) zum Aufteilen/Kombinieren der von dem Motor (11) erzeugten Leistung und der von den elektrischen Maschinen (29, 41) erzeugten/abgenommenen Leistung verbunden sind, so dass die elektrischen Maschinen (29, 41) sowohl als Generatoren als auch als Motoren wirken;
**dadurch gekennzeichnet, dass** die aktiven Elemente, die zumindest eine der elektrischen Maschinen (29; 41) bilden, in einem Baugehäuse (30; 38) untergebracht sind, das einen Teil einer Einheit (13, 14) des Antriebsstranges (10) bildet und den Baurahmen des Fahrzeuges bildet, wobei das Baugehäuse (30; 38) in einem Stück und in Form einer Halbschale gebildet ist, die auf einer Seite offen ist, um einen Zusammenbau eines elektrisch isolierenden Elementes (31; 42), eines Stators (32; 43) und einer Welle (34; 45), die mit einem Rotor (33; 44) versehen ist, von einer axialen Richtung des Antriebsstranges (10) aus zu ermöglichen, um die zumindest eine elektrische Maschine (29, 41) zu bilden.

2. Antriebsstrang (10) nach Anspruch 1, **dadurch gekennzeichnet, dass** der Planetengetriebe-Strang (40) zum Aufteilen/Kombinieren der von dem Motor (11) erzeugten Leistung und der von den elektrischen Maschinen (29, 41) erzeugten/abgenommenen Leistung zwischen den elektrischen Maschinen (29, 41) eingefügt ist.

3. Antriebsstrang (10) nach Anspruch 1 oder 2, **dadurch gekennzeichnet, dass** der Planetengetriebe-Strang (40) zum Aufteilen/Kombinieren der Leistung in dem gleichen Baugehäuse (30; 38) wie eine der zwei elektrischen Maschinen (29; 41) untergebracht ist.

4. Antriebsstrang (10) nach einem der vorhergehenden Ansprüche, **dadurch gekennzeichnet, dass** der Verbrennungsmotor (11) mechanisch über eine weitere Welle (22) mit dem Planetenträger (40a) des Planetengetriebe-Stranges (40) verbunden ist, wobei eine erste (34) der Wellen (34, 45) einer ersten (29) der elektrischen Maschinen (29, 41) mechanisch mit einem Sonnenrad (40d) des Planetengetriebe-Stranges (40) verbunden ist; und wobei eine zweite (45) der Wellen (34, 45) einer zweiten (41) der elektrischen Maschinen (29, 41) mechanisch mit einem Ringzahnrad (40e) des Planetengetriebe-Stranges (40) verbunden ist.

5. Antriebsstrang (10) nach Anspruch 4, **dadurch gekennzeichnet, dass** die zweite Welle (45) der zweiten elektrischen Maschine (41) die mechanisch auf sie von dem Ringzahnrad (40e) übertragene Energie zu der Rotationsenergie addiert, die von dem Rotor (44) der zweiten elektrischen Maschine (41) geliefert wird.

6. Antriebsstrang (10) nach Anspruch 4 oder 5, **dadurch gekennzeichnet, dass** die Wellen (34, 45) und die weitere Welle (22) koaxial zu einer Achse (20) sind, hohl sind und eine Welle (28) zum Antrieb einer Zapfwelle (PTO) aufnehmen.

7. Antriebsstrang (10) nach den Ansprüchen 4 bis 6, **dadurch gekennzeichnet, dass** die weitere Welle (22) in der mit einem Rotor (33) versehenen Welle (34) untergebracht ist.

8. Antriebsstrang (10) nach einem der vorhergehenden Ansprüche, **dadurch gekennzeichnet, dass** der Antriebsstrang eine Halterung (27) und eine Anzahl von Baugehäusen (30, 38, 49, 16a) umfasst, die aus Gusseisen hergestellt sind.

9. Antriebsstrang (10) nach einem der vorhergehenden Ansprüche, **dadurch gekennzeichnet, dass** Leitungen für die Kühlflüssigkeit der elektrischen Maschinen (29; 41) einstückig mit den Baugehäusen (30; 38) ausgebildet sind.

10. Antriebsstrang (10) nach einem der vorhergehenden Ansprüche, **dadurch gekennzeichnet, dass** Einrichtungen zum Einrücken/Ausrücken einer Hülse (18) zum Verbinden/Trennen eines ersten Teils (11) des Antriebsstranges (10), der rein mechanische Leistung erzeugt, mit/von einem zweiten Teil (13, 14) vorgesehen sind, der ausschließlich elektrische Leistung erzeugt; wobei die Hülse (18) einerseits automatisch, wenn der Antriebsstrang (10) läuft, oder andererseits manuell durch einen Fahrer einrückbar/ausrückbar ist, wenn der Antriebsstrang (10) nicht läuft, was es ermöglicht, direkt in einer vollständig elektrischen Betriebsart zu starten.

11. Antriebsstrang nach einem der vorhergehenden Ansprüche, **dadurch gekennzeichnet, dass** das elektrische Isolierelement (31, 42) zwischen dem Baugehäuse (30, 38) und dem Stator (32, 43) vorgesehen ist.

12. Antriebsstrang nach einem der vorhergehenden Ansprüche, **dadurch gekennzeichnet, dass** der Verbrennungsmotor (11) ein Dieselmotor ist.

13. Antriebsstrang nach einem der vorhergehenden Ansprüche, **dadurch gekennzeichnet, dass** das Fahrzeug ein landwirtschaftlicher Traktor ist.

14. Antriebsstrang nach einem der vorhergehenden Ansprüche, **dadurch gekennzeichnet, dass** ein Inverter (21) zum Ändern der Antriebsrichtung zwischen dem Verbrennungsmotor (11) und den zumindest zwei elektrischen Maschinen (29, 41) vorgesehen ist.

15. Antriebsstrang nach Anspruch 3 und einem hiervon abhängigen Anspruch, **dadurch gekennzeichnet, dass** eine Verschlussplatte (37) zum Verschließen sowohl des Baugehäuses (30), das zumindest eine der elektrischen Maschinen (29) aufnimmt, und des Baugehäuse (38) betreibbar ist, das das Planetengetriebe-Strang zum Aufteilen/Kombinieren der Leistung aufnimmt.

16. Antriebsstrang nach Anspruch 3 und einem hiervon abhängigen Anspruch, **dadurch gekennzeichnet, dass** eine Trennwand (39), die einstückig mit dem den Planetengetriebe-Strang zum Aufteilen/Kombinieren der Leistung enthaltenden Baugehäuse (38) ist, zwischen dem Planetengetriebe-Strang (40) und der in dem Gehäuse (38) angeordneten elektrischen Maschine vorgesehen ist.

17. Ein Ackerschlepper, der einen Hybrid-Antriebsstrang (10) nach einem der vorhergehenden Ansprüche umfasst.

## Revendications

1. Chaîne cinématique hybride (10) pour un véhicule, la chaîne cinématique (10) comprenant un moteur à combustion interne (11) et au moins deux machines électriques (29, 41) qui sont connectés mécaniquement par un train d'engrenage épicycloïdal (40) pour diviser / recombiner la puissance générée par ledit moteur (11) et générée /extraite par lesdites machines électriques (29, 41), de telle sorte que les machines électriques (29, 41) fonctionnent à la fois comme des générateurs et comme des moteurs,
**caractérisée en ce que** les éléments actifs définissant au moins l'une des dites machines électriques (29; 41) sont logés dans un carter structurel (30; 38) faisant partie d'un bloc (13,14) de la chaîne cinématique (10) et définissant le corps structurel du véhicule, ledit carter structurel (30; 38) étant formé d'une seule pièce et ayant une forme de demi-coque ouverte sur un côté, de façon à permettre l'assemblage, à partir d'une direction axiale de la chaîne cinématique (10), d'un élément électriquement isolant (31; 42), d'un stator (32; 43) et d'un arbre (34; 45) équipé d'un rotor (33; 44) pour former ladite au moins une machine électrique (29, 41).

2. Chaîne cinématique (10) selon la revendication 1, **caractérisée en ce que** ledit train d'engrenage épicycloïdal (40) permettant de diviser/ recombiner la puissance générée par ledit moteur (11) et générée / extraite par lesdites machines électriques (29, 41) est intercalé entre lesdites machines électriques (29, 41).

3. Chaîne cinématique (10) selon la revendication 1 ou 2, **caractérisée en ce que** ledit train d'engrenage épicycloïdal (40) permettant de diviser / recombiner la puissance est logé dans le même carter structurel (30; 38) que l'une des deux machines électriques (29; 41).

4. Chaîne cinématique (10) selon l'une quelconque des revendications précédentes, **caractérisée en ce que** ledit moteur (11) est connecté mécaniquement par un arbre supplémentaire (22) au porte-satellites (40a) du dit train d'engrenage épicycloïdal (40), moyennant quoi un premier (34) des dits arbres (34, 45) d'une première (29) des dites machines électriques (29, 41) est relié mécaniquement à un planétaire (40d) du dit train d'engrenage épicycloïdal (40), et un second (45) des dits arbres (34, 45) d'une seconde (41) des dites machines électriques (29, 41) est relié mécaniquement à une couronne planétaire (40e) du dit train d'engrenage épicycloïdal (40).

5. Chaîne cinématique (10) selon la revendication 4, **caractérisée en ce que** ledit second arbre (45) de ladite seconde machine électrique (41) additionne l'énergie qui lui est transmise mécaniquement par ladite couronne planétaire (40e) à l'énergie de rotation délivrée par le rotor (44) de ladite seconde machine électrique (41).

6. Chaîne cinématique (10) selon la revendication 4 ou 5, **caractérisée en ce que** les dits arbres (34, 45) et ledit arbre supplémentaire (22) sont coaxiaux avec un axe (20), sont creux et logent un arbre (28) destiné à entraîner une prise de force PTO.

7. Chaîne cinématique (10) selon les revendication 4 à 6, **caractérisée en ce que** ledit arbre supplémentaire (22) est logé dans ledit arbre (34) équipé d'un rotor (33).

8. Chaîne cinématique (10) selon l'une quelconque des revendications précédentes, **caractérisée en ce que** la chaîne cinématique comprend un support (27) et plusieurs carters structurels (30, 38, 49, 16a) fabriqués en fonte coulée.

9. Chaîne cinématique (10) selon l'une quelconque des revendications précédentes, **caractérisée en ce que** des canalisations pour le fluide de refroidissement des dites machines électriques (29; 41) sont formées d'une seule pièce dans les carters structurels (30; 38).

10. Chaîne cinématique (10) selon l'une quelconque des revendications précédentes, **caractérisée en ce que** des moyens d'actionnement sont prévus pour engager / libérer un manchon d'accouplement (18) pour accoupler / désaccoupler une première partie (11) de la chaîne cinématique (10) générant une énergie purement mécanique à / d'une seconde partie (13, 14) générant une énergie purement électrique, ledit manchon d'accouplement (18) pouvant être engagé /libéré d'une part automatiquement lorsque la chaîne cinématique (10) tourne ou d'autre part manuellement par un conducteur lorsque la chaîne cinématique (10) ne tourne pas, permettant de démarrer directement en mode de fonctionnement entièrement électrique.

11. Chaîne cinématique selon l'une quelconque des revendications précédentes, **caractérisée en ce que** l'élément électriquement isolant (31, 42) est prévu entre ledit carter structurel (30, 38) et ledit stator (32, 43).

12. Chaîne cinématique selon l'une quelconque des revendications précédentes, **caractérisée en ce que** le moteur à combustion interne (11) est un moteur diesel.

13. Chaîne cinématique selon l'une quelconque des revendications précédentes, **caractérisée en ce que** le véhicule est un tracteur agricole.

14. Chaîne cinématique selon l'une quelconque des revendications précédentes, **caractérisée en ce qu'**un inverseur (21) pour modifier le sens d'entraînement est prévu entre ledit moteur (11) et les dites au moins deux machines électriques (29, 41).

15. Chaîne cinématique selon la revendication 3 et toute revendication qui en dépend, **caractérisée en ce qu'**une plaque de fermeture (37) peut être actionnée pour fermer à la fois ledit carter structurel (30) logeant ladite au moins une des machines électriques (29) et ledit carter structurel (38) logeant ledit train d'engrenage épicycloïdal (40) permettant de diviser / recombiner la puissance.

16. Chaîne cinématique selon la revendication 3 et toute revendication qui en dépend, **caractérisée en ce qu'**une paroi de séparation (39), solidaire avec ledit carter structurel (38) contenant ledit train d'engrenage épicycloïdal (40) permettant de diviser / recombiner la puissance, est prévue entre ledit train d'engrenage épicycloïdal (40) et la machine électrique (41) contenue dans ledit carter (38).

17. Tracteur agricole comprenant une chaîne cinématique hybride (10) selon l'une quelconque des revendications précédentes.
